# FASCICULE DE BREVET EUROPEEN

(11) **EP 4 400 217 B1**
(45) Date de publication et mention de la délivrance du brevet: **02.07.2025**
(21) Numéro de dépôt: 24179732.3
(22) Date de dépôt: 17.11.2023
(51) Int. Cl.: A01M 7/00, B05B 15/658

(54) **PORTE-BUSES MULTIPLE POUR UN SYSTÈME DE PULVÉRISATION AGRICOLE**
MEHRFACHDÜSENTRÄGER FÜR EIN LANDWIRTSCHAFTLICHES SPRÜHSYSTEM
MULTIPLE NOZZLE HOLDER FOR AN AGRICULTURAL SPRAYING SYSTEM

(30) Priorité: 19.12.2022 FR 2213888
(43) Date de publication de la demande: 17.07.2024
(62) Demande divisionnaire de: 23210742.5
(73) Titulaire: Exel Industries, 51200 Epernay (FR)
(72) Inventeur: PITAUD, Sylvain, 75009 PARIS (FR)
(74) Mandataire: Argyma

(56) Documents cités:
- WO-A1-2014/067785
- US-A- 5 125 578
- US-A- 5 697 650
- US-A1- 2016 178 422
- US-A1- 2017 050 206
- US-B2- 10 189 031

## Description

### DOMAINE TECHNIQUE

La présente invention concerne le domaine des systèmes de pulvérisation agricoles. Plus précisément, l'invention concerne les dispositifs de pulvérisation, comprenant notamment des portes-buses multiples, c'est-à-dire portant une pluralité de buses de pulvérisation.

### ETAT DE LA TECHNIQUE

Une rampe de pulvérisation agricole comprend généralement des portes-buses répartis de manière uniforme sur toute la longueur de la rampe de pulvérisation, pour pulvériser du produit phytosanitaire sous forme liquide sur des rangs de végétaux. Pour améliorer l'efficacité de la pulvérisation de produit, il est nécessaire de faire varier le débit de pulvérisation des buses et de le piloter proportionnellement à la vitesse d'avancement de la machine agricole supportant la rampe de pulvérisation et / ou en fonction du produit pulvérisé par exemple. Pour répondre à cette problématique, il est connu, par exemple de US 10 189 031 B2 ou de US 2016/178422 A1, des porte-buses supportant plusieurs buses, par exemple des buses différentes ou des buses ayant des débits différents.

Lorsqu'un utilisateur souhaite changer de buse, il doit effectuer une opération, généralement manuelle, pour tourner le porte-buses et ainsi rendre active une autre buse adaptée à une vitesse d'avancement de la machine agricole différente. Cette opération nécessite une interruption de la pulvérisation, au profit d'une opération de modification des buses actives sur chacun des portes buses. Il est ainsi connu des portes-buses comprenant une pluralité de buses pouvant être actives de manière simultanée, et présentant un débit identique ou non. Ces portes-buses sont généralement pilotables automatiquement par le biais d'un actionneur électrique, permettant de sélectionner la ou les buses actives au moyen d'un dispositif de sélection des buses actives.

Néanmoins, de tels portes-buses présentent l'inconvénient majeur de voir l'intégralité du mécanisme de sélection des buses activées baigner dans le fluide distribué par le dispositif de pulvérisation. Ainsi, dans le cadre de la pulvérisation d'un produit phytosanitaire, le produit est en contact avec des composants mécaniques risquant de polluer ledit produit avant pulvérisation. A l'inverse, le contact avec un fluide pouvant comprendre des agents chimiques, par exemple corrosifs, nuit à la durée de vie du dispositif et est incompatible avec une nécessité de lubrification des éléments mécaniques mobiles, ce qui réduit également leur durée de vie. En outre dans cette configuration, l'intégralité du dispositif doit être étanche, l'ensemble de ces contraintes limitant le choix des matériaux utilisables pour la fabrication du porte-buses. Un autre inconvénient provient de l'architecture de porte-buses dans lequel le carter du porte-buses comprenant par exemple un actionneur tel qu'un moteur électrique contient la majorité de la masse ce qu'il amène le risque de pivotement du port-buses sous l'action d'un moment généré par le poids du carter.

L'invention vise à résoudre les inconvénients de l'état de la technique, notamment en proposant un dispositif de fixation d'un porte-buses permettant de limiter le risque de pivotement du porte-buses.

### PRESENTATION DE L'INVENTION

Selon un mode de réalisation qui ne fait pas partie de l'invention revendiquée, un porte-buses, notamment pour un pulvérisateur agricole, comprend :
- un corps logeant une conduite d'admission de liquide configurée pour être alimentée en liquide par une ligne d'alimentation de liquide ;
- une chambre de distribution périphérique du corps alimentée en liquide par la conduite d'admission et communicant avec une pluralité de conduites de sortie de liquide, les interfaces entre la chambre de distribution et chacune des conduites de sortie de liquide délimitant des orifices de passage de liquide de la chambre de distribution, chacune desdites conduites de sortie débouchant sur une tête de pulvérisation ;
- une pluralité de soupapes en partie agencées dans la chambre de distribution, chacune desdites soupapes étant mobile entre une position de fermeture étanche de l'orifice de passage de liquide correspondant de la chambre de distribution et une position d'ouverture dudit orifice de passage de la chambre de distribution ;
- un plateau circulaire mobile en rotation par rapport au corps et logé dans un compartiment à mécanismes du corps présentant une bordure périphérique en contact avec une première surface de contact d'extrémité de chaque soupape pour commander le déplacement de ladite soupape entre la position de fermeture et la position d'ouverture ;
- un actionneur fixé au corps pour entrainer le plateau en rotation ;
dans lequel la bordure périphérique du plateau présente des portions de bordure hautes et des portions de bordure basses reliées par des portions en pente, de sorte que dans la position d'ouverture d'une soupape de la pluralité de soupapes, la première surface de contact d'extrémité de ladite soupape est en contact avec une première portion de bordure de plateau parmi une portion de bordure haute et une portion de bordure basse, et dans la position de fermeture de ladite soupape, la première surface de contact d'extrémité de la soupape est en contact avec une deuxième bordure de plateau parmi une portion de bordure haute et une portion de bordure basse, la deuxième bordure étant différente de la première bordure, l'entrainement en rotation du plateau déplaçant le contact entre la première surface de contact d'extrémité et la bordure périphérique, de la première bordure vers la deuxième bordure ou de la deuxième bordure vers la première bordure en passant par une portion en pente.

Grâce à une telle combinaison de caractéristique, les composants mécaniques impliqués dans la chaine cinématique de commande d'un tel porte-buses sont isolés d'un fluide phytosanitaire circulant d'une ligne de pulvérisation vers les têtes de pulvérisation. De plus, un utilisateur peut ainsi piloter librement et à distance la buse active sans intervention manuelle, ce qui simplifie le temps de fonctionnement effectif dudit porte-buses. En outre, le temps de réponse pour le déplacement d'une soupape de la position ouverte à la position fermée ou de la position fermée à la position ouverte est non seulement paramétrable par la vitesse de rotation transmise par l'actionneur au plateau, mais aussi par l'inclinaison des portions de pentes de la bordure périphérique du plateau. Autrement dit, il est possible de modifier les performances d'un tel porte-buses en modifiant la géométrie du plateau, ce qui ne contraint qu'à modifier une seule pièce parmi l'ensemble du porte-buses pour augmenter ou réduire la durée de passage d'une position à l'autre. Enfin, dans une telle configuration, il est possible de passer de la position d'ouverture d'une soupape à une position de fermeture de la soupape puis à nouveau à une position d'ouverture de la soupape sans inverser le sens de rotation du plateau circulaire, en alternant bordures hautes et bordures basses.

Avantageusement, dans une orientation angulaire donnée du plateau par rapport au corps, plusieurs soupapes de la pluralité de soupapes sont en position d'ouverture simultanément, chaque première surface de contact d'extrémité de soupape étant en contact avec une seule première bordure du plateau. Dans une telle configuration, un fluide circulant dans le porte-buses peut ainsi être pulvérisé par une pluralité de buses de manière simultanée.

Avantageusement, chaque première portion de bordure s'étend de manière circonférentielle selon un secteur circulaire donné. En particulier, les secteurs circulaires de chacune des premières bordures peuvent être différentes les uns des autres, de sorte que pour une révolution complète du plateau, le contact entre la première surface de contact d'extrémité de soupape se fait majoritairement avec les portions de bordures hautes ou majoritairement avec les portions de bordures basses.

Avantageusement, le porte-buses comprend un nombre pair de soupapes associées deux à deux, les soupapes associées étant agencées symétriquement par rapport à un plan de référence perpendiculaire au plateau, ledit plateau comprenant au moins une position angulaire donnée pour chaque paire de soupapes associées dans une position d'ouverture simultanée de ladite paire de soupapes

Avantageusement, la chambre de distribution est alimentée par deux embranchements de la conduite d'admission, chaque embranchement débouchant sur la chambre de distribution d'un côté différent du plan de référence. Dans une telle configuration, chaque moitié de la pluralité de soupapes est alimentée simultanément par la conduite d'admission, augmentant ainsi le débit de remplissage du porte-buses. En outre, la séparation de la conduite d'admission en deux embranchements permet de réduire les pertes de charge singulière de l'écoulement d'un fluide dans le porte-buses.

Avantageusement, chaque soupape comprend en outre un ressort mécanique de compression liant la soupape à des parois de la chambre de distribution du corps ; une deuxième extrémité de soupape configurée pour fermer de manière étanche les orifices de passage de la chambre de distribution en position de fermeture de soupape, ladite deuxième extrémité comportant en outre des moyens d'étanchéité. Dans cette configuration, le ressort mécanique permet de maintenir la soupape dans la position de fermeture.

Avantageusement, la première surface d'extrémité de contact est portée par une dent en contact avec la bordure périphérique du plateau. Dans une telle configuration, toute rotation sur elle-même d'une soupape est bloquée. En outre, le glissement de la dent sur la bordure du plateau est facilité, en particulier sur les zones transitionnelles, par exemple lors du passage du contact d'une portion haute à une portion en pente.

Avantageusement, un axe de rotation de l'actionneur est déporté radialement par rapport à un axe de rotation du plateau. Dans une telle configuration, un axe directionnel de la ligne d'alimentation peut intersecter l'axe de rotation du plateau mobile, ce qui confère un meilleur équilibre lors de la fixation du porte-buses à ladite ligne d'alimentation. De plus, l'actionneur, par exemple un moteur électrique pas à pas, peut occuper un volume libre en fonction de la puissance désirée de moteur.

Avantageusement, l'actionneur comprend un pignon formant une liaison engrenage avec une denture du plateau. Ainsi, une réduction ou une multiplication du couple transmis par l'actionneur au plateau est possible. La denture du plateau occupe un secteur circulaire supérieur ou égal à 120°.

Avantageusement, le porte-buses comprend au moins une vanne d'arrêt fixée au corps pour piloter la pression d'un liquide circulant dans la conduite d'admission. La vanne d'arrêt est de préférence une électrovanne d'arrêt. De préférence encore, l'électrovanne pilote la pression du liquide circulant dans la conduite d'admission par des signaux de modulation de largeur d'impulsions. Alternativement, la vanne d'arrêt peut être un stop-goutte mécanique ou pneumatique.

L'invention a pour objet un dispositif de fixation de porte-buses à une ligne d'alimentation en fluide, ledit dispositif étant configuré pour fixer un porte-buses comprenant un corps et un carter à une ligne d'alimentation, la ligne d'alimentation s'étendant entre le corps du porte-buses et le carter du porte-buses, le dispositif de fixation comprenant :
- au moins un support de réception configuré pour être en contact cylindrique surfacique avec la ligne d'alimentation ;
- au moins un loquet ;
- une charnière de support de réception permettant le pivotement d'un loquet autour du premier axe de pivotement parallèle à la direction de la ligne d'alimentation, le loquet étant mobile entre une position de fermeture dans laquelle le loquet entoure la ligne d'alimentation sur une périphérie externe de la ligne d'alimentation et une position d'ouverture dans laquelle le contact entre le support de réception et la ligne d'alimentation peut être rompu ;
- une goupille de support de réception permettant de verrouiller le loquet en position de fermeture en s'insérant dans des trous coaxiaux du loquet et du support de réception, la goupille comprenant un collier de serrage élastiquement déformable dans une forme initiale non déformée, ladite goupille pouvant pivoter autour d'un deuxième axe de pivotement parallèle au premier axe de pivotement entre une position de serrage dans laquelle le collier de serrage est déformé élastiquement pour entourer et serrer la périphérie externe de la ligne d'alimentation par un encliquetage et une position libre dans laquelle le collier de serrage est laissé libre dans sa forme initiale, le contact entre le collier de serrage et la ligne d'alimentation étant rompu ;
le dispositif étant tel que le collier de serrage de la goupille comprend une excentrique en saillie radiale par rapport à la direction de la ligne d'alimentation, l'excentrique étant configurée pour, dans la position de serrage de la goupille, recouvrir le loquet.

En outre, dans la position de serrage de la goupille, l'excentrique est configurée pour s'appuyer sur une languette du carter du porte-buses.

Grâce à une telle combinaison de caractéristiques, un tel dispositif de fixation permet à la fois de fixer un porte-buses à une ligne d'alimentation en fluide tout en assurant une fonction de fixation d'un carter à un porte-buses comprenant par exemple un actionneur tel qu'un moteur électrique pas à pas configuré pour alimenter en énergie mécanique le porte-buses. Le dispositif de fixation permet en outre une architecture de porte-buses dans lequel la majorité de la masse du carter est directement aligné avec la ligne d'alimentation et le porte-buses, ce qui limite le risque de pivotement du porte-buses sous l'action d'un moment généré par le poids du carter.

Avantageusement, le dispositif de fixation comprend un premier support de réception situé d'un côté du porte-buses et un deuxième support de réception situé d'un autre côté du porte buses.

Avantageusement, les charnières des deux supports de réception pivotent chacune par rapport à un axe de pivotement situé de part et d'autre de la ligne d'alimentation. Dans cette configuration, chacune des goupilles pivote dans un sens de rotation, ce qui prévient le risque d'ouverture accidentelle du dispositif de fixation et la chute du porte-buses de la ligne d'alimentation.

Avantageusement, le collier de serrage comprend une patte courbée. La patte courbée permet à un utilisateur d'exercer une pression suffisante pour encliqueter le collier de serrage sur la ligne d'alimentation ou bien de désengager le collier de serrage vers la position libre de la goupille.

Avantageusement, chaque loquet comprend un moyen de verrouillage en position de fermeture sur le support de réception de sorte que ledit moyen de verrouillage est retenu par une butée du support de réception lorsque le dispositif de fixation est soumis au poids du porte-buses. Un tel moyen de verrouillage permet de faciliter la mise en place du porte-buses sur la ligne d'alimentation avant l'assemblage du carter avec le corps du porte-buses suivi de l'insertion de la goupille et de l'encliquetage du collier de serrage sur la ligne d'alimentation.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
la figure 1 est une représentation schématique en perspective isométrique d'un porte-buses , notamment d'un dispositif de fixation d'un porte-buses selon un premier mode de réalisation de l'invention ;
la figure 2 est une représentation schématique en perspective isométrique éclatée de la figure 1 ;
la figure 3 est une représentation schématique en vue de dessus de la figure 1 ;
la figure 4 est une représentation schématique en vue de coupe suivant une direction C-C de la figure 3 ;
la figure 5 est une représentation schématique en vue de coupe suivant une direction B-B de la figure 3 ;
la figure 6 est une représentation schématique en vue de face d'une région particulière détail de la figure 1 selon un autre aspect de l'invention ;
la figure 7 est une représentation schématique en vue de gauche d'un détail de la figure 1 selon un autre aspect de l'invention.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

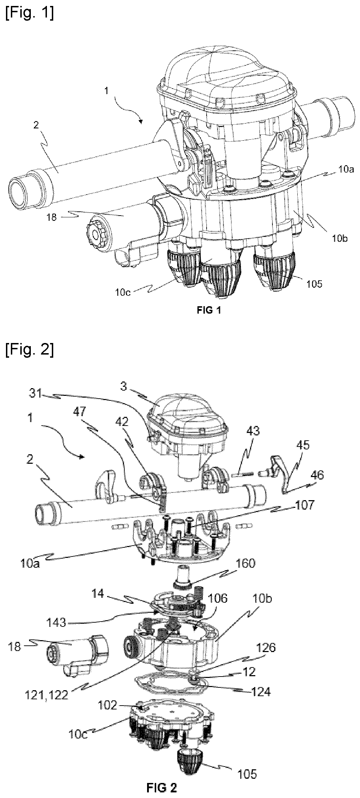

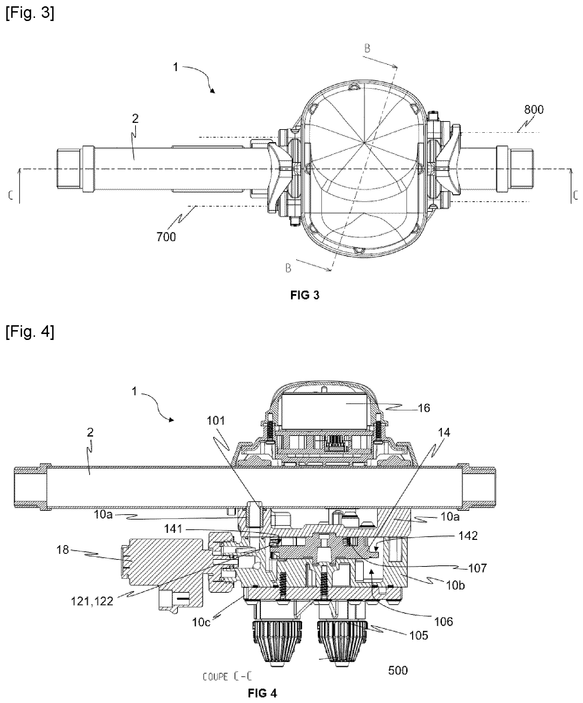

Les figures 1 à 5 illustrent un porte-buses 1 configuré faire partie d'un système de pulvérisation. Le porte-buses 1 est destiné à être fixé à une ligne d'alimentation 2 et à être par exemple porté ou traîné par un véhicule, en particulier un engin agricole. Le porte-buses 1 comprend un corps, notamment prismatique, ayant pour fonction de loger les différents composants du porte-buses 1. Le corps est de préférence formé à partir d'une partie supérieure de corps 10a, d'une partie intermédiaire de corps 10b et d'une partie inférieure de corps 10c. La partie supérieure 10a est fixée à la ligne d'alimentation 2 et solidaire de la partie intermédiaire de corps 10b. La partie inférieure de corps 10c est solidaire de la partie intermédiaire de corps 10b. Les parties de corps 10a,10b et 10c sont solidarisées par des moyens de fixation, par exemple par des vis, distribués sur la périphérie des parties de corps 10a, 10b et 10c.

Le corps comprend une conduite d'admission 101 de liquide, par exemple de liquide phytosanitaire. La conduite d'admission 101 s'étend à travers la partie supérieure de corps 10a et à travers la partie intermédiaire de corps 10b pour relier la ligne d'alimentation 2 à une vanne d'arrêt 18 pour piloter la pression du liquide circulant dans la conduite d'admission 101. La vanne d'arrêt 18 est de préférence une électrovanne 18, fixée à la partie intermédiaire de corps 10b. L'électrovanne 18 permet de piloter la pression du liquide circulant dans la conduite d'admission par des signaux de modulation de largeur d'impulsions, issus par exemple de la commande d'un conducteur depuis la cabine de la machine agricole.

La conduite d'admission 101 débouche sur une chambre de distribution 102, localisée dans la partie inférieure de corps 10c. La chambre de distribution 102 est alimenté en liquide par la conduite d'admission 101. La chambre de distribution 102 s'étend en périphérie de la partie inférieure de corps 10c. La chambre de distribution communique avec une pluralité de conduites de sorties 104, ici au nombre de quatre. Les interfaces entre la chambre de distribution 102 et chacune des conduites de sortie de liquide délimitent des orifices de passage de liquide 103, également au nombre de quatre. Les conduites de sortie de liquide 104 s'étendent dans la partie inférieure de corps 10c et débouchent dans des têtes de pulvérisation 105. Pour garantir l'étanchéité de la chambre de distribution 102, un joint d'étanchéité, par exemple un joint élastomère, est intercalé entre la partie intermédiaire de corps 10b et la partie de corps inférieure 10c.

L'assemblage de la partie supérieure de corps 10a et de la partie intermédiaire de corps 10b délimite un compartiment 106 destiné à loger des éléments mécaniques mobiles du porte-buses 1. Le compartiment 106 comprend un plateau 14 mobile en rotation par rapport à la partie intermédiaire de corps 10b et à la partie supérieure de corps 10a. La liaison entre le corps et le plateau 14 est une liaison pivot autour d'un axe de rotation du plateau 500, l'axe de rotation du plateau 500 étant parallèle à un axe d'alignement en position assemblée des parties de corps 10a, 10b, 10c. La liaison pivot entre le corps et le plateau 14 est de préférence assurée par deux paliers lisses lubrifiés localisés au niveau d'une partie centrale du plateau 14, un des paliers lisses assurant le guidage en rotation par rapport à la partie de corps supérieure 10a et l'autre des paliers lisses assurant le guidage en rotation par rapport à la partie intermédiaire de corps 10b. En outre, le plateau 14 est arrêté axialement d'une part par un épaulement en appuie sur la partie supérieure de corps 10a et d'autre part par une épaulement en appuie sur la partie intermédiaire de corps 10b. De manière alternative, la liaison pivot peut être assurée par des bagues de roulement, par exemple des bagues de roulement à billes ou à rouleaux.

Le plateau 14 présente une forme cylindrique, une épaisseur du plateau 14 étant sensiblement plus faible qu'un rayon du plateau 14. Une bordure périphérique du plateau 14 présente des portions de bordure hautes 141 et des portions de bordures basses 142 reliées par des portions en pentes 143. Les bordures basses 142 sont axialement plus proches de la partie intermédiaire de corps 10b et les bordures hautes 141 sont axialement plus proches de la partie supérieure de corps 10a. Les portions de bordures en pentes 143 relient les bordures hautes et les bordures basses de sorte que la bordure du plateau 14 est continue. Le plateau 14 comprend en outre une denture 144 pour former une liaison engrenage avec un pignon 160 d'un actionneur 16 destiné à entraîner le plateau 14 en rotation. L'actionneur 16 est par exemple un moteur électrique pas à pas, mais peut alternativement être un actionneur pneumatique ou mécanique. Un axe de rotation 600 de l'actionneur 16 est déporté radialement par rapport à l'axe de rotation 500 du plateau 14. Avantageusement, la liaison engrenage entre le pignon 160 et la denture 144 génère une multiplication ou une réduction du couple transmis par l'actionneur 16 au plateau 14. La denture 144 du plateau 14 occupe un secteur circulaire, avantageusement mais non limitativement supérieur ou égal à 120°. Avantageusement, une vis de butée 107, est déporté radialement vers la denture 144 pour servir de butée de fin de course à la rotation du plateau 14. En outre, la vis 107 permet de définir une origine à l'orientation angulaire du plateau 14, notamment pour l'actionneur 16, qui correspond à la position de busée de la denture 144 contre la vis de butée 107.

Le porte-buses 1 comprend une pluralité de soupapes 12 en partie agencées dans la chambre de distribution 102, chacune des soupapes 12 étant mobile entre une position de fermeture étanche de l'orifice de passage de liquide 103 correspondant de la chambre de distribution et une position d'ouverture dudit orifice de passage. Ici, les soupapes 12 sont au nombre de quatre mais le nombre de soupapes peut être différent suivant le mode de réalisation choisi. Chacune des soupapes 12 comprend une première surface d'extrémité de contact 121 portée par une dent 122 en contact avec la bordure périphérique du plateau 14. Les soupapes 12 sont liées à la partie supérieure de corps 10a par des ressorts mécaniques 123 et s'étendent à travers le compartiment 106 vers la chambre de distribution 102. Ici, les ressorts mécaniques 123 sont des ressorts de compression pour maintenir un contact entre une deuxième extrémité 124 de soupape 12 et les orifices de passage de liquide 103 en position de fermeture des soupapes 12. La deuxième extrémité de soupape 124 comprend en outre des moyens d'étanchéité 125 destinés à coopérer avec les orifices de passages de liquide 103 pour garantir une étanchéité. Les moyens d'étanchéités 125 sont par exemple des joints en élastomère ou des circlips. Les soupapes 12 peuvent en outre comprendre des moyens d'étanchéité supplémentaires 126, notamment pour les parties de chacune des soupapes s'étendant entre le compartiment 106 et la chambre de distribution 102.

La description se concentre ici à décrire le fonctionnement du porte-buses 1. La ligne d'alimentation 2 alimente en liquide, par exemple en liquide phytosanitaire la conduite d'admission 101 vers la chambre d'admission 102, par le biais de l'électrovanne 18 permet de moduler la pression et le débit du fluide entrant dans la chambre d'admission 102. Les soupapes 12 étant initialement en position de fermeture, la chambre d'admission 102 peut ainsi se remplir de liquide. En position de fermeture des soupapes 12, les dents 122 des soupapes 12 sont en contact avec une chacune une portion basse 142 du plateau 14. Par une commande de l'actionneur 16, le plateau mobile 14 est entrainé en rotation autour de l'axe de rotation du plateau 500. Le contact entre les dents 122 et la bordure périphérique du plateau 14 se déplace alors en suivant les portions en pentes 143, pour atteindre les bordures hautes 141 dans la position d'ouverture des soupapes 12. Les deuxièmes extrémités de soupape 124 libèrent alors les orifices de passage de liquide 103. Le liquide contenu dans la chambre de distribution 102 s'écoule alors vers les conduites de sortie de liquide 104 et peut être pulvérisé via les têtes de pulvérisation 105 vers l'extérieur du porte-buses 1.

La conséquence d'une telle architecture de porte-buses 1 et de son fonctionnement réside dans le fait que le chemin emprunté par un écoulement de fluide évite un passage par le compartiment 106 dans lequel se retrouvent les éléments mobiles du porte-buses, de l'admission à la sortie du fluide.

Aussi, chaque bordure haute 141 et chaque bordures basses 142 s'étendent de manière circonférentielle suivant un secteur circulaire donné. Les secteurs circulaires de chacune des bordures hautes 141 et de chacune des bordures basses 142 peuvent être différents.

Dans le mode de réalisation décrit, il est donc possible de configurer les secteurs circulaires de chaque bordure de telle sorte que pour un porte-buses, une à quatre soupapes 12, avec un total de six positions angulaires différentes du plateau 14, aboutit à six configurations possibles d'ouverture ou de fermeture des quatre soupapes. Ainsi, quatre premières positions angulaires correspondent à une position de fermeture de trois des soupapes 12 et à une position d'ouverture de la dernière soupape 12, la soupape 12 en position de fermeture étant différente pour chacune des quatre premières positions angulaires du plateau 14. Les deux positions angulaires restantes correspondent à des configurations où deux des quatre soupapes 12 sont en position d'ouverture et les deux autres soupapes 12 sont en position de fermeture, les deux soupapes 12 en position de fermeture et les deux soupapes 12 en position d'ouverture étant différentes pour chacune des deux positions angulaires restantes. Le porte-buses 1 peut ainsi pulvériser du liquide de manière continue par plusieurs têtes de pulvérisation 105 simultanément.

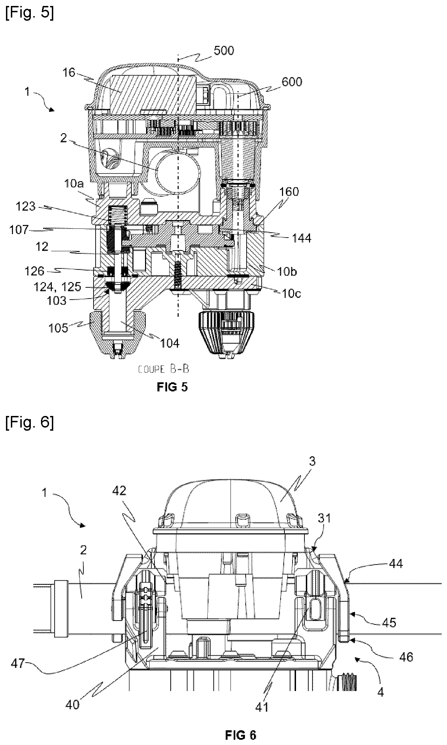

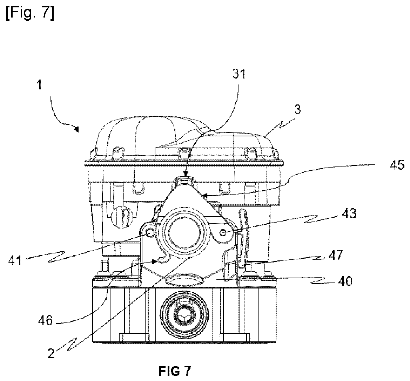

Les figures 5 à 7 illustrent un porte-buses 1 selon un autre aspect de l'invention, relatif à la fixation du porte-buses 1 sur la ligne d'alimentation 2 par un dispositif de fixation 4.

La partie supérieure de corps 10a porte deux supports de réception 40 du dispositif de fixation 4, en contact cylindrique surfacique avec la ligne d'alimentation 2. Chacun des deux supports de réception 40 comprend une charnière 41 permettant le pivotement d'un loquet 42 autour d'un axe de pivotement, 700, 800, parallèlement à la direction de la ligne d'alimentation, le loquet 42 étant mobile entre une position d'ouverture dans laquelle le contact entre le support de réception 40 et la ligne d'alimentation 2 peut être rompu et une position de fermeture dans laquelle le loquet 42 entoure la ligne d'alimentation 2 sur une périphérie externe de ligne pour maintenir le contact entre le support de réception 40 et la ligne d'alimentation 2. En position de fermeture, le loquet 42 est verrouillé par le biais d'une goupille 43 s'insérant dans des trous coaxiaux du support de réception 40 et du loquet 42. Dans le mode de réalisation décrit, chacun des loquets 42 pivote dans des sens de rotation différents et les axes de pivotement 700, 800, sont de part et d'autre de la ligne d'alimentation 2.

L'actionneur 16 est logé dans un carter 3 fixé à la partie supérieure de corps 10a de sorte que la ligne d'alimentation 2 s'étend en partie entre le carter 3 et la partie supérieure de corps 10a. Le carter 3 comprend en outre deux languettes 31 s'étendant en saillie parallèlement à la direction de la ligne d'alimentation 2, en regard et à distance des loquets 42 en position de fermeture des loquets. Chacune des goupilles 43 comprend en outre un collier de serrage 44 élastiquement déformable dans une forme initiale non déformée. La goupille 43 peut pivoter autour de l'axe de pivotement 700, 800 de la charnière de l'autre support de réception. La goupille 43 pivote ainsi entre une position de serrage dans laquelle le collier de serrage 44 est déformé élastiquement pour entourer et serrer la périphérie externe de la ligne d'alimentation 2 par un encliquetage et une position libre dans laquelle le collier de serrage 44 est laissé libre dans sa forme initiale et le contact entre le collier de serrage 44 et la ligne d'alimentation 2 est rompu.

Le collier de serrage 44 comprend une excentrique 45 en saillie radiale par rapport à la direction de la ligne d'alimentation 2. L'excentrique 45 dans la position de serrage de la goupille 43 s'appuie et exerce une contrainte sur la languette du carter 3. Dans une telle configuration, la goupille 43 en position de serrage permet de fixer le porte-buses 1 à la ligne d'alimentation 2, mais également de maintenir le carter 3 solidaire de la partie supérieure de corps 10a, garantissant ainsi l'écoulement d'un liquide de la ligne d'alimentation 2 vers la conduite d'admission 101.

Le collier de serrage 44 comprend une patte courbée 46. La patte courbée 46 permet à un utilisateur d'exercer une pression suffisante pour encliqueter le collier de serrage 44 sur la ligne d'alimentation 2 ou bien de désengager le collier de serrage 44 vers la position libre de la goupille 43.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Par exemple, le porte-buses peut comprendre un nombre pair de soupapes 12, différent de quatre, les soupapes 12 étant associées deux à deux. Les soupapes 12 associées sont agencées symétriquement par rapport à un plan de référence perpendiculaire au plateau 14. Le plateau 14 peut s'orienter dans au moins une position angulaire donnée pour chaque paire de soupapes 12 associées dans une position d'ouverture simultanée de ladite paire de soupapes 12. Alternativement, le porte-buses peut contenir un nombre impair de soupapes 12, les soupapes 12 peuvent alors être associées différemment.

Alternativement, le porte-buses 1 peut comprendre une deuxième vanne d'arrêt, de préférence disposée par exemple symétriquement sur la partie intermédiaire de corps 10b par rapport à la première vanne d'arrêt.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Dispositif de fixation (4) d'un porte-buses (1) à une ligne d'alimentation (2) en fluide d'un système de pulvérisation, ledit dispositif (4) étant configuré pour fixer un porte-buses (1) comprenant un corps (10a, 10b, 10c) et un carter (3) à une ligne d'alimentation (2), la ligne d'alimentation (2) s'étendant entre le corps (10a, 10b, 10c) du porte-buses (1) et le carter (3) du porte-buses (1), le dispositif de fixation (4) comprenant :
- au moins un support de réception (40) étant configuré pour être en contact cylindrique surfacique avec la ligne d'alimentation (2) ;
- au moins un loquet (42) ;
- une charnière de support de réception (40) permettant le pivotement du loquet (42) autour d'un premier axe de pivotement (700, 800) parallèle à la direction de la ligne d'alimentation (2), le loquet (42) étant mobile entre une position de fermeture dans laquelle le loquet (42) entoure la ligne d'alimentation (2) sur une périphérie externe de la ligne d'alimentation (2) et une position d'ouverture dans laquelle le contact entre le support de réception (40) et la ligne d'alimentation (2) peut être rompu ; le dispositf (4) étant **caractérisé en ce que** le dispositif en plus comprend
- une goupille (43) de support de réception (40) permettant de verrouiller le loquet (42) en position de fermeture en s'insérant dans des trous coaxiaux du loquet (42) et du support de réception (40), la goupille (43) comprenant un collier de serrage (44) élastiquement déformable dans une forme initiale non déformée, ladite goupille (43) pouvant pivoter autour d'un deuxième axe de pivotement (700, 800) parallèle au premier axe de pivotement (700, 800) entre une position de serrage dans laquelle le collier de serrage (44) est déformé élastiquement pour entourer et serrer la périphérie externe de la ligne d'alimentation (2) par un encliquetage et une position libre dans laquelle le collier de serrage (44) est laissé libre dans sa forme initiale, le contact entre le collier de serrage (44) et la ligne d'alimentation (2) étant rompu ;
- le collier de serrage (44) de la goupille (43) comprenant une excentrique (45) en saillie radiale par rapport à la direction de la ligne d'alimentation (2), l'excentrique (45) étant configurée pour, dans la position de serrage de la goupille (43), recouvrir le loquet (42).

2. Dispositif de fixation (4) selon la revendication 1, comprenant un premier support de réception (40) situé d'un côté du porte-buses (1) et un deuxième support de réception (40) situé d'un autre côté du porte-buses (1).

3. Dispositif de fixation (4) selon la revendication 2, dans lequel les charnières des deux supports de réception (40) pivotent chacune par rapport à un axe de pivotement (700, 800) situé de part et d'autre de la ligne d'alimentation (2).

4. Dispositif de fixation (4) selon l'une quelconque des revendications précédentes, dans lequel le collier de serrage (44) comprend une patte courbée (46).

5. Dispositif de fixation (4) selon l'une quelconque des revendications précédentes, dans lequel chaque loquet (42) comprend un moyen de verrouillage en position de fermeture sur le support de réception (40) de sorte que ledit moyen de verrouillage est retenu par une butée du support de réception (40) lorsque le dispositif de fixation (4) est soumis au poids du porte-buses (1).

## Patentansprüche

1. Vorrichtung (4) zum Befestigen eines Düsenhalters (1) an einer Fluidversorgungsleitung (2) eines Sprühsystems, wobei die Vorrichtung (4) zum Befestigen eines Düsenhalters (1), umfassend einen Körper (10a, 10b, 10c) und ein Gehäuse (3), an einer Versorgungsleitung (2) konfiguriert ist, wobei sich die Versorgungsleitung (2) zwischen dem Körper (10a, 10b, 10c) des Düsenhalters (1) und dem Gehäuse (3) des Düsenhalters (1) erstreckt, die Befestigungsvorrichtung (4) umfassend:
- mindestens einen Aufnahmeträger (40), der konfiguriert ist, um in zylindrischem Oberflächenkontakt mit der Versorgungsleitung (2) zu stehen;
- mindestens einen Riegel (42);
- ein Aufnahmeträgerscharnier (40), das die Schwenkung des Riegels (42) um eine erste Schwenkachse (700, 800) herum parallel zu der Richtung der Versorgungsleitung (2) ermöglicht, wobei der Riegel (42) zwischen einer geschlossenen Position, in der der Riegel (42) die Versorgungsleitung (2) an einem Außenumfang der Versorgungsleitung (2) umgibt, und einer offenen Position, in der der Kontakt zwischen dem Aufnahmeträger (40) und der Versorgungsleitung (2) unterbrochen sein kann, bewegbar ist; wobei die Vorrichtung (4) **dadurch gekennzeichnet ist, dass** die Vorrichtung zusätzlich umfasst
- einen Stift (43) des Aufnahmeträgers (40), der es ermöglicht, den Riegel (42) in der geschlossenen Position durch Einführen in koaxiale Löcher des Riegels (42) und des Aufnahmeträgers (40) zu verriegeln, der Stift (43) umfassend eine Klemmschelle (44), die in einer ursprünglichen unverformten Form elastisch verformbar ist, wobei der Stift (43) um eine zweite Schwenkachse (700, 800) herum parallel zu der ersten Schwenkachse (700, 800) zwischen einer Klemmposition, in der die Klemmschelle (44) elastisch verformt ist, zum Umgeben und Festklemmen des Außenumfangs der Versorgungsleitung (2) durch Einschnappen, und einer freien Position, in der die Klemmschelle (44) in ihrer ursprünglichen Form frei gelassen wird, schwenken kann, wobei der Kontakt zwischen der Klemmschelle (44) und der Versorgungsleitung (2) unterbrochen ist;
- die Klemmschelle (44) des Stifts (43) umfassend einen Exzenter (45), der radial zu der Richtung der Versorgungsleitung (2) vorspringt, wobei der Exzenter (45), in der Klemmposition des Stifts (43), zum Abdecken des Riegels (42) konfiguriert ist.

2. Befestigungsvorrichtung (4) nach Anspruch 1, umfassend einen ersten Aufnahmeträger (40), der sich auf einer Seite des Düsenhalters (1) befindet, und einen zweiten Aufnahmeträger (40), der sich auf einer anderen Seite des Düsenhalters (1) befindet.

3. Befestigungsvorrichtung (4) nach Anspruch 2, wobei die Scharniere der zwei Aufnahmeträger (40) jeweils relativ zu einer Schwenkachse (700, 800) schwenken, die sich auf beiden Seiten der Versorgungsleitung (2) befindet.

4. Befestigungsvorrichtung (4) nach einem der vorstehenden Ansprüche, wobei die Klemmschelle (44) eine gekrümmte Lasche (46) aufweist.

5. Befestigungsvorrichtung (4) nach einem der vorstehenden Ansprüche, wobei jeder Riegel (42) in der geschlossenen Position an dem Aufnahmeträger (40) ein Verriegelungsmittel umfasst, sodass die Verriegelungseinrichtung durch einen Anschlag des Aufnahmeträgers (40) festgehalten wird, wenn die Befestigungsvorrichtung (4) dem Gewicht des Düsenhalters (1) ausgesetzt ist.

## Claims

1. Device (4) for attaching a nozzle holder (1) to a fluid supply line (2) of a spray system, said device (4) being configured to attach a nozzle holder (1) comprising a body (10a, 10b, 10c) and a casing (3) to a supply line (2), the supply line (2) extending between the body (10a, 10b, 10c) of the nozzle holder (1) and the casing (3) of the nozzle holder (1), the attachment device (4) comprising:
- at least one receiving support (40) configured for cylindrical surface contact with the supply line (2);
- at least one latch (42);
- a receiving support (40) hinge allowing the latch (42) to pivot about a first pivot axis (700, 800) parallel to the direction of the supply line (2), the latch (42) being movable between a closed position in which the latch (42) surrounds the supply line (2) on an outer periphery of the supply line (2) and an open position in which the contact between the receiving support (40) and the supply line (2) can be broken; the device (4) being **characterized in that** the device further comprises
- a receiving support (40) pin (43) for locking the latch (42) in the closed position by insertion into coaxial holes of the latch (42) and of the receiving support (40), the pin (43) comprising a clamping collar (44) which is elastically deformable into an undeformed initial shape, said pin (43) being pivotable about a second pivot axis (700, 800) parallel to the first pivot axis (700, 800) between a clamping position in which the clamping collar (44) is elastically deformed to surround and clamp the outer periphery of the supply line (2) by a snap fit, and a free position in which the clamping collar (44) is left free in its initial shape, the contact between the clamping collar (44) and the supply line (2) being broken;
- the clamping collar (44) of the pin (43) comprising an eccentric (45) protruding radially relative to the direction of the supply line (2), the eccentric (45) being configured, in the clamping position of the pin (43), to cover the latch (42).

2. Attachment device (4) according to claim 1, comprising a first receiving support (40) located on one side of the nozzle holder (1) and a second receiving support (40) located on another side of the nozzle holder (1).

3. Attachment device (4) according to claim 2, wherein the hinges of the two receiving supports (40) each pivot relative to a pivot axis (700, 800) located on either side of the supply line (2).

4. Attachment device (4) according to any of the preceding claims, wherein the clamping collar (44) comprises a bent lug (46).

5. Attachment device (4) according to any of the preceding claims, wherein each latch (42) comprises a means of locking in the closed position on the receiving support (40), so that said locking means is retained by a stop of the receiving support (40) when the attachment device (4) is subjected to the weight of the nozzle holder (1).
